# EUROPEAN PATENT APPLICATION

(11) **EP 1 921 403 A2**
(43) Date of publication of application: **14.05.2008**
(21) Application number: 07020014.2
(22) Date of filing: 12.10.2007
(51) Int. Cl.: F25B 45/00, F25B 49/00

(54) **Apparatus for regulating refrigeration systems**

(30) Priority: 30.10.2006 IT VA20060063
(71) Applicant: MARIEL S.r.L., 21052 Busto Arsizio (VA) (IT)
(72) Inventor: Faccin, Lucciano, 01286 Cacapava, San Paolo (BR); Liutkus Ricardo, 1106 5002 Santos, San Paolo (BR)
(74) Representative: Lunati, Vittoriano

(57) **Abstract**

Apparatus for regulating refrigeration systems including a refrigerant fluid and comprising transport means (2) of the refrigerant fluid, suitable to carry and transport the refrigerant fluid, measurement means (3) suitable to measure the quantity of refrigerant fluid contained in the refrigeration system and a connection device (4) suitable to functionally connect the transport means (2) and the measurement means (3) simultaneously to the refrigeration system.

## Description

The present invention relates to an apparatus for regulating refrigeration systems according to the preamble of claim 1.

Refrigeration systems, used for different purposes and different machines, are known.

In particular, refrigeration systems are used for refrigerators, air conditioners for buildings, air conditioners for vehicles and the like.

As it is known, these systems decrease the temperature of a room by means of endothermal evaporation of particular fluids, called refrigerant fluids, carried inside a sealed closed circuit. In this circuit the refrigerant fluid is cyclically subjected to evaporation and subsequent liquefaction by means of variations in pressure.

Refrigerant fluids are fed into the refrigeration system through a specific connection. They are fed after a vacuum has been created inside the circuit, so that the refrigerant fluid does not come into contact with other gases, in particular with atmospheric humidity which could damage it.

Moreover, refrigeration systems are subject to small and inevitable load losses, and therefore the quantity of refrigerant fluid present in the system must be periodically reintegrated.

These operations to reintegrate, feed and adjust the quantity of refrigerant fluid are referred to here for simplicity as refrigeration system regulation operations.

These refrigeration system regulation operations are currently carried out by means of different elements and devices, according to the sequence of operations specified hereunder.

A first operation provides for connecting a gauge to the connection of the system and measuring the pressure of the refrigerant fluid.

A second operation provides for connecting a vacuum pump to the connection and complete suction not only of the refrigerant fluid but of any fluid present in the system. This operation is not always carried out; in fact it is carried out only in the case of complete recharge of the refrigerant fluid or before activating the system. Moreover, it is not always necessary to measure the pressure before this operation.

A third operation provides for feeding refrigerant fluid into the system. This feeding is carried out by means of a container of pressurized fluid which is connected, through a specific connection hose, to the connection of the system. It is thus necessary to disconnect the gauge or vacuum pump and reconnect the specific hose connected to the pressurized container.

The quantity of fluid fed must be calculated in advance on the basis of the manufacturer's instructions and is regulated by measuring the decrease in weight of the pressurized container by means of a specific balance.

A fourth operation provides for detaching the connection hose connected to the pressurized container and once again attaching the gauge to measure the pressure to the connection of the system.

At this point, if the gauge indicates the required value, the operation to regulate the system is concluded; otherwise, it is necessary to recalculate the quantity of fluid to be fed, re-attach the pressurized container and repeat the third and fourth operation until the pressure has reached the optimal value.

The aforesaid known technique has some important drawbacks.

In fact, it is evident from the description above that the operation is lengthy and complicated.

Another drawback lies in the fact that to carry out a regulation of this type it is necessary to use apparatus composed of different instruments: a vacuum pump, a gauge, a pressurized container, several connection hoses of the container and a balance.

Therefore, it is somewhat difficult to transport the aforesaid elements and to carry out regulation of the system on the site. Nonetheless, on-site regulation is increasingly necessary, not only for refrigerators but also for air conditioning systems which are more costly, installed in somewhat inaccessible areas and must have a higher average duration.

Another drawback lies in the fact that the regulation described is very rough and somewhat imprecise.

In fact, the different operations to connect and disconnect the various elements cause temporary losses of pressure in the system. Moreover, the mass of fluid fed is calculated on the basis of the weight of the pressurized container, and therefore the quantity of fluid present inside the connection hose is not calculated.

In this situation the technical aim of the present invention is to devise an apparatus for regulating refrigeration systems capable of substantially overcoming the aforesaid drawbacks.

Within said technical aim, an important object of the invention is to provide an apparatus for regulating refrigeration systems which allows fast regulation of the system.

Another important object of the invention is to obtain an apparatus for regulating refrigeration systems which is weightless and easily transportable.

Last but not least object of the invention is to provide an apparatus for regulating refrigeration systems which is precise.

The technical aim and the objects specified are attained by an apparatus for regulating refrigeration systems according to claim 1.

The appended drawings show, by way of example, preferred embodiments of the invention. In particular:

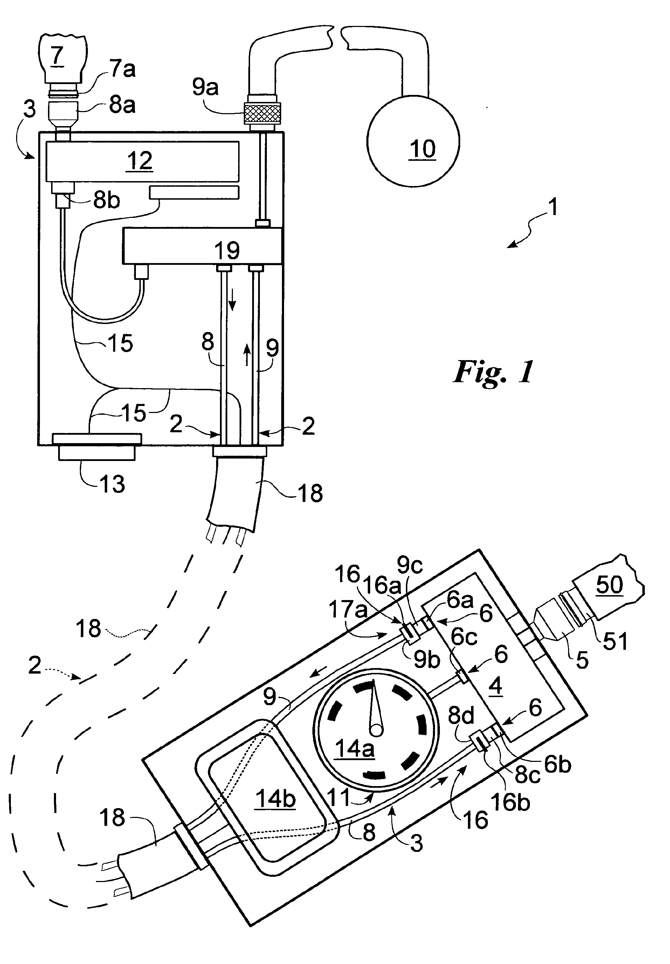

**Figure 1** schematizes a cross-section of the apparatus according to the invention; and

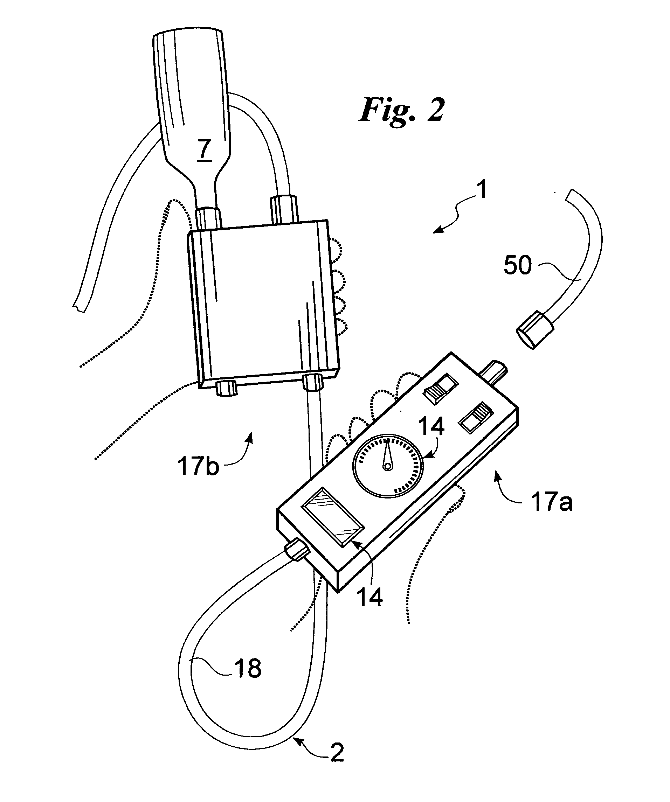

**Figure 2** shows a front view of the apparatus according to the invention.
With reference to the Figures, the apparatus according to the invention is indicated as a whole with the number **1**.

It is suitable to regulate refrigeration systems, comprising refrigerators, air conditioners for buildings, for cars and the like. More specifically, the apparatus 1 is suitable to regulate the quantity of refrigerant fluid present in a specific closed refrigeration circuit **50**, present in the refrigeration system.

As specified, the quantity of refrigerant fluid present in said circuit 50 can be regulated by means of a specific access valve **51** to said circuit 50.

Briefly, the apparatus 1 comprises transport means **2** of the refrigerant fluid, suitable to carry and transport said refrigerant fluid, and measurement means **3** suitable to measure at least the quantity of refrigerant fluid contained in the refrigeration circuit, part of the refrigeration system.

The apparatus 1 also comprises a connection device 4 suitable to be connected to the access valve 51 of the refrigeration circuit 50 and to access said circuit 50.

For this purpose, the device 4 comprises an outlet connection **5** constrainable to the access valve 51, by means of a threaded connection or the like.

The connection device 4 is also suitable to functionally and simultaneously connect the transport means 2 and the measurement means 3 to the refrigeration system.

The connection device 4 is suitably realized by a closed chamber suitable to be placed in fluid communication with the circuit 51, by means of the connection 5, and with the transport means 2 and the measurement means 3, by means of a plurality of inlet connections **6**.

In particular, the transport means 2 comprise feed ducts **8** for the refrigerant fluid, suitable to transport said fluid from a pressurized container **7** to the connection device 4.

The pressurized container 7 can be of various typologies and is of a known type. In particular, different pressurized containers are manufactured and marketed by "Nevada Refrigerants".

It comprises an outlet valve **7a**, connectable to the feed ducts 8.

The feed ducts 8 therefore comprise a connection **8a**, connectable to the outlet valve 7a of the pressurized container 7, preferably a check valve **8b**, located in proximity to the connection 8a and suitable to prevent gas from returning into the container 7, and an outlet **8c** suitable to be connected in fluid communication with the connection device 4.

The connection device 4 in fact comprises an inlet connection **6a** for the ducts 8.

The feed duct 8 finally comprises a tap of the inflowing fluid **8d**. This tap 16a is located in proximity to and preferably at the outlet 8c. It allows the feed duct 8 to be closed or opened, and can be opened by means of a first control lever **16a** or the like, of known type.

With this tap 8d fluid can therefore be prevented from entering or allowed to enter the circuit 50.

The transport means 2 also advisably comprise removal ducts **9** of the fluid, suitable to transport the fluid from the inside of the circuit 51 to the outside environment or to a specific container, which are therefore suitable to be connected to a vacuum pump **10**, of known type.

The removal ducts 9 thus comprise a connection **9a** connectable to a vacuum pump 10, a fluid outlet tap **9b** and an inlet **9c** suitable to be connected to the connection device 4.

In fact, the connection device 4 also comprises an inlet connection **6b** for the ducts 9.

The fluid outlet tap 9b allows the removal duct 9 of the outflowing fluid to be closed or opened, is located in proximity to, or at, the inlet 9c and can be opened by means of a second control level **16b** or the like, of known type.

The measurement means 3 instead comprise a gauge **11**, suitable to measure the pressure of the refrigerant fluid contained in the refrigeration system and in particular in the circuit 50.

The measurement means 3 could comprises two gauges 11, one for the high and one for the low pressure, when the apparatus 1 is designed for the refrigeration systems for cars.

The gauge 11 is of known type and is also connected to the connection device 4, more specifically to the inlet connection **6c** of the gauge 11.

The gauge 11 is therefore in fluid communication with the circuit 50 through the device 4. It is therefore able to measure the pressure of the refrigerant fluid in the circuit 50, in particular it is able to measure this pressure simultaneously to actuation of the transport means 2 described.

The measurement means 3 also comprise a balance **12** suitable to measure the quantity of refrigerant fluid contained in the pressurized container 7.

In particular, the balance 12 is realized by a load cell placed at the connection 8a.

The load cell realizing the balance 12 is of known type and comprises a specific printed circuit connected to an electric battery **13**, also of known type.

The measurement means 3 finally comprise at least one viewing device **14** suitable to view the measurement values.

In particular, there are two viewing devices 14: a first viewing device **14a** suitable to view the values measured by the gauge 11 and a second viewing device **14b** suitable to view the values measured by the balance 13.

In particular, the first viewing device 14a is of analogue type and directly connected to the gauge 11, while the second viewing device 14b is a digital display and is connected to the balance 14 and to the battery 13 by means of electrical cables **15**.

The apparatus 1 also comprises control members **16** of the transport means 2 and of the measurement means 3. The control members 16 comprise the control levers 16a and 16b of the taps 8d and 9b and any other secondary control members, in particular a reset button which allows zero setting of the balance 12.

The apparatus 1 also comprises at least a first handheld unit **17a**, suitable to be grasped and handled manually, more specifically with one hand.

Said first handheld unit 17a includes the connection device 4 and at least part of said transport means 2 and of said measurement means 3.

There are preferably provided a first 17a and a second **17b** handheld unit.

In particular, the first handheld unit 17a comprises control members 16, more specifically the control levers 16a and 16b of the taps 8d and 9b, the viewing devices 16 and the connection device 4.

This first handheld unit 17a is therefore connected to the circuit 50.

The second handheld unit 17b instead advisably comprises the connections 8a and 9a, the balance 12 and the battery 13.

The second handheld unit also comprises a distribution valve **19** connected to the feed 8 and removal 9 ducts. This valve 19 acts as a support for said ducts 8 and 9.

The two units 17a and 17b are connected by means of a flexible cable **18**.

This cable 18 includes the elements that are placed on both the handheld units 17a and 17b, i.e. the feed ducts 8 the removal ducts 9 and the electrical cables 15.

Finally, the apparatus 1 can comprise mechanical connection means to the pump 10 placed on the first unit 17a.

Operation of an apparatus for regulating refrigeration systems, described above in a structural sense, is as follows.

In a first case the apparatus 1 is used to regulate the quantity of fluid in the circuit 50, while in a second case the apparatus 1 is used to completely empty a circuit 50 and to feed the fluid into said circuit.

In the first case the outlet connection 5 of the apparatus 1 is connected to the access valve 51 of the circuit 50. The circuit 50 and the device 1 are therefore in fluid communication.

The taps 8d and 9b are in the closed position and therefore shut off the ducts 8 and 9, while the remaining valves allow fluids to flow through the feed 8 and removal 9 ducts and a pressurized container 7 is connected to the connection 8a.

The gauge 11 measures the pressure inside the circuit.

If the pressure is not at the required level, it is possible to act on the control members 16 and in particular on the lever 16a, and control feed of refrigerant fluid into the circuit 50.

Simultaneous to feed of fluid it is possible to check, by means of the gauge 11 and in particular of the viewing device 14a, whether the pressure has reached the required levels inside the circuit 50.

At the same time it is also possible to view the quantity of refrigerant fluid fed in by means of the balance 12 and of the viewing means 14b.

The whole operation can be carried out easily holding the two handheld units 17a and 17b with both hands or resting the unit 17b on a surface in a suitable position and holding the first handheld unit 17a in one hand.

The whole operation can also be carried out observing only the first handheld unit 17b, which in fact contains all the elements required to perform the operation: the control members 16 and the viewing devices 14a and 14b.

In the case in which the apparatus 1 is instead used to completely empty a system and feed the fluid into it the use of a vacuum pump 10 is necessary.

In this case the pump is connected to the connection 9a and emptying of the circuit 50 is controlled through the lever 16b.

The subsequent operations are instead identical to the operations described previously and also in this case the various operations can be carried out easily. Finally, in this case the second handheld unit 17b can be placed in a suitable housing on the pump 10.

The invention achieves important advantages.

In fact, the apparatus 1 allows fast and precise regulation of refrigeration systems.

This advantage is due to the fact that the operations to feed or remove refrigerant fluid, to measure the pressure inside the circuit and to measure the quantity of fluid fed into the circuit, can be carried out simultaneously and easily, as specified above.

Therefore, it is not necessary to carry out the operations in sequence one at a time and to connect, one at a time, different elements to the valve 51. In fact, it is sufficient to connect the connection 5 to the valve 51 to carry out all the different operations.

A further advantage lies in the evident fact that the apparatus 1 can be transported easily and quickly. In fact, it weighs only a few kilograms and can be transported by hand.

Another advantage lies in the fact that the apparatus 1 comprises at lest a first handheld unit 17a, therefore it is adapted to be manually used and grasped.

Last but not least advantage of the apparatus 1 is the high precision thereof, in particular of the gauge 11.

The gauge 11 is in fact connected in proximity to the valve 51 and therefore allows precise measurement and, moreover, there are no losses of load caused by continuously removing elements from and connecting elements to the valve 51.

The invention is susceptible to modifications and variants falling within the scope of the inventive concept.

All details can be replaced with equivalent elements and materials, and the forms and dimensions can be any.

## Claims

1. Apparatus for regulating refrigeration systems including a refrigerant fluid and comprising transport means (2) of said refrigerant fluid, suitable to carry and transport said refrigerant fluid, measurement means (3) suitable to measure at least the quantity of said refrigerant fluid contained in said refrigeration system, and **characterized in that** it comprises at least one handheld unit (17a), suitable to be grasped manually, and including at least part of said transport means (2) and of said measurement means (3), and a connection device (4) suitable to functionally connect said transport means (2) and said measurement means (3) simultaneously to said refrigeration system.

2. Apparatus according to Claim 1, wherein said transport means (2) comprise a connection (8a) suitable to be connected to a pressurized container (7) of said refrigerant fluid.

3. Apparatus according to one or more of the previous Claims, in particular Claim 1, wherein said transport means (2) comprise a connection (9a) suitable to be connected to a vacuum pump (10) suitable to allow suction of said refrigerant fluid from said refrigeration system.

4. Apparatus according to one or more of the previous Claims, wherein said measurement means (3) comprise at least one gauge (11) suitable to measure the pressure of said refrigerant fluid contained in said refrigeration system.

5. Apparatus according to Claim 4, wherein said measurement means (3) comprise two gauges (11) suitable to measure respectively the high and the low pressure of said refrigerant fluid contained in said refrigeration system.

6. Apparatus according to one or more of the previous Claims, wherein said measurement means (3) comprise a balance (12) suitable to measure the quantity of said refrigerant fluid contained in said pressurized container (7).

7. Apparatus according to one or more of the previous Claims, wherein said transport means (2) comprise at least one control member (16) of said transport means (3).

8. Apparatus according to Claim 7, wherein said control members (16) are suitable to selectively control inflow or outflow of said refrigerant fluid in said system.

9. Apparatus according to one or more of the previous Claims, wherein said measurement means (3) comprise at least one viewing device (14) suitable to view the measurement values.

10. Apparatus according to one or more of the previous Claims, comprising two handheld units (17a, 17b) connected by a flexible cable (18).
